# EUROPÄISCHE PATENTSCHRIFT

(11) **EP 1 068 985 B1**
(45) Veröffentlichungstag und Bekanntmachung des Hinweises auf die Patenterteilung: **22.10.2003**
(21) Anmeldenummer: 00109691.6
(22) Anmeldetag: 08.05.2000
(51) Int. Cl.: B60N 2/015

(54) **Verriegelungsvorrichtung und Verankerungssystem**
Locking device and anchoring system
Dispositif de verrouillage et système d'ancrage

(30) Priorität: 16.07.1999 DE 29912439 U
(43) Veröffentlichungstag der Anmeldung: 17.01.2001
(73) Patentinhaber: Johnson Controls GmbH, 51399 Burscheid (DE)
(72) Erfinder: Shafry, Gavriel, 42929 Wermelskirchen (DE); Winkelhake, Bernd, 38446 Wolfsburg (DE); Fenner, Christian, 45468 Mülheim an der Ruhr (DE); Seigel, Jürgen, 77746 Schutterwald (DE); Schindler, Klaus, 77871 Renchen (DE)
(74) Vertreter: Wolff, Felix, Dr.

(56) Entgegenhaltungen:
- EP-A- 0 776 781
- WO-A-99/02365
- GB-A- 2 212 208
- GB-A- 2 231 617
- US-A- 5 562 322
- US-A- 5 577 805
- US-A- 5 722 727
- US-A- 5 904 403

## Beschreibung

Die vorliegende Erfindung betrifft eine Verriegelungsvorrichtung mit einer Drehfalle und mit einem in der Drehfalle verriegelbaren Bolzen, wobei die Drehfalle zum Verriegeln, insbesondere mittels des in ein Fangmaul der Drehfalle eingreifenden Bolzens, aus einer Entriegelungsposition in eine Verriegelungsposition verschwenkbar ist, sowie mit einem Sicherungselement, das bei Einnahme der Verriegelungsposition der Drehfalle aus einer nicht sperrenden Position in eine Sperrposition bewegbar ist, in der es eine Schwenkbewegung der Drehfalle in ihre Entriegelungsposition verhindert.

Des weiteren betrifft die Erfindung ein Verankerungssystem zur gegenseitigen Verankerung eines ersten Teils und eines zweiten Teils, wobei das erste Teil relativbeweglich zu dem zweiten Teil ist, und das eine Verriegelungsvorrichtung der vorgenannten Art aufweist.

Anwendungsgebiete der Erfindung sind insbesondere Sitzverankerungen für entnehmbare und wickelbare Fahrzeugsitze, Verankerungen von Schleudersitzen, Tür- und Klappenschlösser, mobile Innenraumsysteme, Verbindungen von Schiffen untereinander oder Container-Verankerungen.

Eine derartige Verriegelungsvorrichtung ist beispielsweise in der DE 43 24 691 A1 beschrieben. Diese bekannte Vorrichtung dient zur Verriegelung zweier relativ zueinander schwenkbarer Elemente in einer vorbestimmten Relativposition, insbesondere zur Verriegelung der klappbaren Rücklehne am Sitzteil eines Fahrzeugsitzes, die einen an dem einen Element befestigten Verriegelungsbolzen und eine an dem anderen Element schwenkbar angeordnete, mit einem Fangmaul den Verriegelungsbolzen übergreifende Drehfalle, sowie eine in die Drehfalle formschlüssig einfallende Sperrklinke aufweist. Zwecks Erzielung einer von Toleranzgrenzen unabhängigen totalen Spielfreiheit der Verriegelungsvorrichtung in ihrer Verriegelungposition liegt einerseits der Verriegelungsbolzen in einer Dreipunktauflage ein, deren einer Punkt von der Fangmaulflanke der Drehfalle gebildet ist, und ist andererseits die Schwenklagerung der Sperrklinke so ausgebildet, daß durch eine begrenzte Verschiebebewegung der Sperrklinke am Ende ihrer Einfallbewegung in die Drehfalle auf die Drehfalle eine deren Fangmaulflanke an den Verriegelungsbolzen anpressende Kraft erzeugt wird.

Bei dieser und ähnlichen Verriegelungsvorrichtungen besteht das Problem einer ungenügenden Sicherheit gegen Fehlbedienung. Unter Fehlbedienung wird dabei entweder eine sogenannte Scheinverriegelung oder eine nicht gewünschte Verriegelung verstanden. Eine Scheinverriegelung ist eine unsichere Verriegelung, bei der eine große Gefahr darin besteht, daß der Benutzer annimmt, das System wäre verriegelt, obwohl dies in Wirklichkeit aber nicht der Fall ist. Im Falle des Einsatzes einer solchen Verriegelungsvorrichtung zur Verankerung eines Fußes eines Sitzes mit einem Boden eines Automobils kann es so beispielsweise vorkommen, daß der Benutzer die Fahrt mit einem nicht vollständig verriegelten Sitz antritt und im Crashfall nicht mit dem Sitz gehalten werden kann, was fatale Folgen nach sich zieht. Eine nicht gewünschte Verriegelung kann durch unsachgemäße Handhabung entstehen, so daß zum Einsetzen des Sitzes eine manuelle Entriegelung der Sitzverankerung notwendig sein kann, was zur Verärgerung des Benutzers führt.

Aus der GB-A-2 212 208 ist darüber hinaus ein Verriegelungsmechanismus mit einer Drehfalle, einem Bolzen und einem verschiebbar gelagerten Sicherungselement beschrieben. Darüber ist ein Federelement derart mit in Führungsschlitzen des Sicherungselements geführten Halterungen verbunden, dass bei Verschwenken der Drehfalle in die Verriegelungsposition ein Verschieben des Sicherungselements in eine Sicherungsposition erfolgt.

Jedoch ist bei diesem Mechanismus nicht gewährleistet, dass bei Entnahme des Bolzens aus der Drehfalle der Entriegelungszustand zwangsweise ausgelöst wird. Die in der GB-A-2 212 208 beschriebene Vorrichtung bietet somit ebenfalls keinen ausreichenden Schutz gegen Fehlbedienungen.

Der Erfindung liegt die Aufgabe zugrunde, mit geringem konstruktiven Aufwand eine Verriegelungsvorrichtung und ein Verankerungssystem mit einer Verriegelungsvorrichtung der eingangs genannten Art zu schaffen, die sich durch erhöhte Sicherheit gegen Fehlbedienung auszeichnen.

Erfindungsgemäß wird dies bei einer Verriegelungsvorrichtung nach dem Oberbegriff des Anspruchs 1, die derjenigen nach GB-A-2 212 208 gattungsgemäß ausgebildet ist, durch ein Steuerelement erreicht, weiches derart ausgebildet und in Bezug auf die Drehfalle sowie auf das Sicherungselement angeordnet ist, daß das Steuerelement das Vorhandensein des Bolzens im Fangmaul erfaßt, wobei bei nicht im Fangmaul vorhandenem Bolzen durch das Zusammenwirken von Drehfalle, Sicherungselement und Steuerelement zwangsweise die Entriegelungsposition der Drehfalle vorliegt.

Die erfindungsgemäße Verriegelungsvorrichtung ist somit vorteilhafterweise monostabil für die Entriegelungsposition der Drehfalle ausgelegt, wobei unter monostabiler Auslegung folgendes verstanden wird: Ein System oder ein Element des Systems wird als monostabil bezeichnet, wenn es auch nach äußerer Krafteinwirkung nur einen stabilen Zustand einnehmen kann. Im Gegensatz dazu stehen eine bistabile oder eine labile Systemauslegung, wobei ein System oder ein Element des Systems als bistabil bezeichnet wird, wenn es nach äußerer Krafteinwirkung zwei stabile Zustände einnehmen kann. Wenn es mehrere nicht stabile Zustände einnehmen kann, wird ein System oder ein Element des Systems als labil bezeichnet. Durch die monostabile Auslegung der Entriegelungsposition der Drehfalle kann eine Verriegelung der erfindungsgemäßen Verriegelungsvorrichtung nur dann eintreten, wenn der verriegelbare Bolzen im Eingriff mit der Drehfalle ist. Das heißt, das System integriert den Verriegelungsbolzen derart, daß die Funktion der Verriegelung nur mit Hilfe dieses Elementes möglich ist. Selbst eine absichtlich herbeigeführte Manipulation, in der Form, daß ein dem Bolzen ähnliches Teil zunächst in der üblichen Weise in das Fangmaul der Drehfalle eingeführt wird, es dabei zu einer Verriegelung kommt und anschließend das Teil aber wieder seitlich, d.h. senkrecht zur ursprünglichen Einführungsrichtung bzw. senkrecht zu einer Ebene, in der sich die Öffnung des Fangmaules erstreckt, entfernt wird, führt dazu, daß sich die erfindungsgemäße Verriegelungsvorrichtung nach dem Entfernen des Teils wieder selbstätig entriegelt. Ein mittels der erfindungsgemäßen Verriegelungsvorrichtung zu verriegelndes Teil, beispielsweise ein entnehmbarer Fahrzeugsitz, kann daraufhin ohne zusätzliches manuelles Eingreifen des Benutzers zur Entriegelung der Verriegelungsvorrichtung, ordnungsgemäß an einer Fahrzeugbodenstruktur verankert werden. Damit ist das System weitgehend sicher gegen Fehlbedienung. Selbst Bleche, wie sie z.B. bei Schließsystemen in Garagen vorkommen, können zwar eingeführt werden, führen aber letztendlich nicht zu einem dauerhaften Eintreten der Verriegelungsposition der Drehfalle der erfindungsgemäßen Verriegelungsvorrichtung.

Die erfindungsgemäße Verriegelungsvorrichtung zeichnet sich somit des weiteren vorteilhafterweise dadurch aus, daß die Entriegelung auf zwei unterschiedliche Weisen vorgenommen werden kann. Die Entriegelung kann sowohl dadurch erfolgen, daß das Sicherungselement aus seiner Sperrposition für die Drehfalle entfernt wird, als auch durch ein seitliches Entfernen des Bolzens aus der Drehfalle, wie dies vorstehend beschrieben ist.

Das Steuerelement kann dabei in bevorzugten vorteilhaften Ausführungen des weiteren derart ausgebildet und in Bezug auf die Drehfalle sowie auf das Sicherungselement angeordnet sein, daß es
- beim Einführen des Bolzens in das Fangmaul die Bewegung des Sicherungselementes in seine Sperrposition freigibt oder selbst bewirkt,
- bei Entnahme des Bolzens aus dem Fangmaul eine Bewegung des Sicherungselementes in seine nicht sperrende Position sowie eine Bewegung der Drehfalle in ihre Entriegelungsposition auslösen oder selbst bewirkt und
- bei nicht im Fangmaul vorhandenen Bolzen die Bewegung des Sicherungselementes in seine Sperrposition verhindert.

Für das erfindungsgemäße Verankerungssystem ist eine solche, erfindungsgemäße Verriegelungsvorrichtung vorgesehen, wobei die Drehfalle, das Sicherungselement und das Steuerelement mit dem ersten Teil schwenkbar, insbesondere über ein Gehäuse, verbunden sind und der Bolzen mit dem zweiten Teil fest verbunden ist.

Dabei kann das erste Teil durch den Fuß eines Sitzes und das zweite Teil durch den Boden eines Automobils gebildet sein oder auch umgekehrt.

Weitere vorteilhafte Ausgestaltungsmerkmale der Erfindung sind in den Unteransprüchen sowie der folgenden Beschreibung enthalten.

Anhand zweier mittels der Zeichnung veranschaulichter, bevorzugter Ausführungsbeispiele wird im folgenden die Erfindung näher erläutert. Dabei zeigen:
- Fig. 1 bis 3: in verschiedenartigen Arbeitspositionen (Verriegelungsposition, Zwischenposition und Entriegelungsposition) eine erste Ausführung einer erfindungsgemäßen Verriegelungsvorrichtung, jeweils in schematisierter Vorderansicht,
- Fig. 4 bis 6: in Verriegelungsposition, jedoch ohne Bolzen, eine zweite Ausführung einer erfindungsgemäßen Verriegelungsvorrichtung in perspektivischer Darstellung, sowie in Vorderansicht und in Draufsicht.

In den verschiedenen Figuren der Zeichnung sind gleiche Teile stets mit den gleichen Bezugszeichen versehen und werden daher in der Regel auch jeweils nur einmal beschrieben.

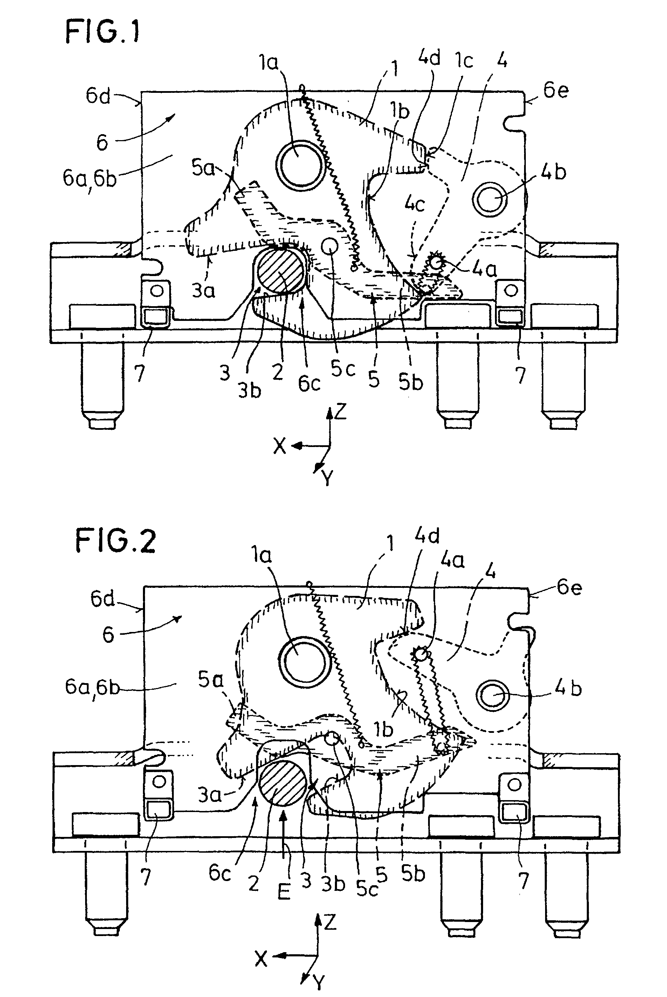

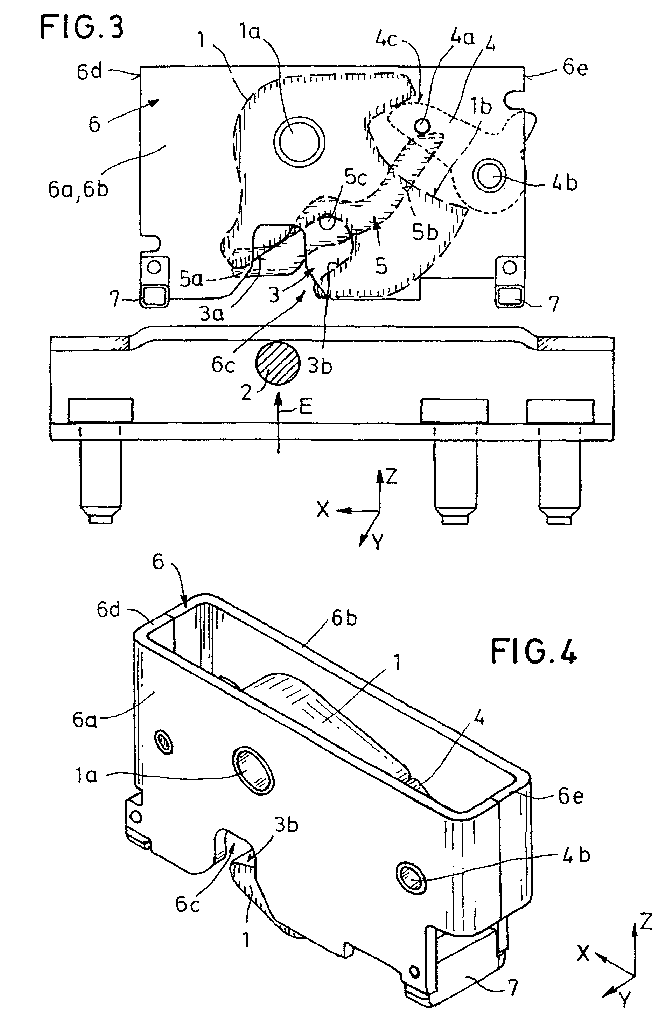

Wie zunächst Fig. 1 bis 3 für eine erste Ausführung veranschaulichen, weist eine erfindungsgemäße Verriegelungsvorrichtung eine Drehfalle 1 und einen in der Drehfalle verriegelbaren Bolzen 2 auf. Die Drehfalle 1 ist zum Verriegeln, insbesondere mittels des in ein Fangmaul 3 der Drehfalle 1 eingreifenden Bolzens 2, aus einer Entriegelungsposition (Fig. 3) in eine Verriegelungsposition (Fig. 1) verschwenkbar. Die Verriegelungsvorrichtung weist des weiteren ein Sicherungselement 4 auf, das bei Einnahme der Verriegelungsposition der Drehfalle 1 aus einer nicht sperrenden Position (Fig. 3) in eine Sperrposition (Fig. 1) bewegbar ist, in der es eine Schwenkbewegung der Drehfalle 1 in ihre Entriegelungsposition verhindert. Die Entriegelungsposition der Drehfalle 1 ist eine monostabile Position, d.h. auch nach äußerer Krafteinwirkung kann die Drehfalle 1 nur einen stabilen Zustand, den der Entriegelungsposition einnehmen.

Außerdem ist ein Steuerelement 5 vorgesehen, welches derart ausgebildet und in Bezug auf die Drehfalle 1 sowie auf das Sicherungselement 4 angeordnet ist, daß das Steuerelement 5 das Vorhandensein des Bolzens 2 im Fangmaul 3 erfaßt. Bei nicht im Fangmaul 3 vorhandenem Bolzen 2 wirken dabei Drehfalle 1, Sicherungselement 4 und Steuerelement 5 derart zusammen, daß zwangsweise immer die Entriegelungsposition der Drehfalle 1 vorliegt.

Das Steuerelement 5 ist als Hebel, insbesondere als ein Hebel mit zwei Armen 5a, 5b, ausgebildet. Der eine Hebelarm 5a des Steuerelementes 5 deckt bei Vorliegen der Entriegelungsposition der Drehfalle 1 das Fangmaul der Drehfalle ab bzw. er kann auch darin gehalten sein. Der Hebel kann dabei insbesondere unter der Wirkung einer in Fig. 1 bis 3 nicht näher bezeichneten Feder stehen, die sowohl in der Entriegelungsposition und noch stärker in der Verriegelungsposition der erfindungsgemäßen Verriegelungsvorrichtung eine Kraftwirkung auf das Steuerelement 5 ausübt, die in eine Lagerachse 5c des Hebels wirkt. Das Steuerelement 5 kann auch selbst als Feder ausgebildet sein.

Der andere Hebelarm 5b des Steuerelementes 5 liegt bei nicht im Fangmaul 3 vorhandenem Bolzen 2 an einem Mitnehmer 4a des Sicherungselementes 4 an und verhindert so die Bewegung des Sicherungselementes 4 in seine Sperrposition (Fig. 3). Das Sicherungselement 4 wiederum hält die Drehfalle 1 in ihrer Entriegelungsposition. Es wäre aber auch möglich, daß die Drehfalle 1 mittels einer Feder, die ihre Kraftwirkung in der gezeigten Darstellung entgegen dem Uhrzeigersinn um eine Lagerachse 1a entfaltet, in ihrer Entriegelungsposition gehalten ist.

Der Hebelarm 5a des Steuerelementes 5, der bei Vorliegen der Entriegelungsposition der Drehfalle 1 das Fangmaul 3 der Drehfalle 1 abdeckt, wird beim Einführen des Bolzens 2 in das Fangmaul 3 (Pfeilrichtung E in Fig. 2) durch den Bolzen 2, insbesondere gegen die Wirkung der genannten Feder, aus dem Bereich des Fangmaules 3 (in der Zeichnung nach oben) gedrückt. Der andere Hebelarm 5b bewegt sich dadurch (im Uhrzeigersinn) von dem Mitnehmer 4a des Sicherungselementes 4 weg. Somit gibt das Steuerelement 5 beim Einführen des Bolzens 2 in das Fangmaul 3 die Bewegung des Sicherungselementes 4 in seine Sperrposition frei. Das Sicherungselement 4 kann sich nun, beispielsweise unter der Wirkung einer das Sicherungselement 4 entsprechend der gewählten Darstellung entgegen dem Uhrzeigesinn um seine Lagerachse 4b beaufschlagenden Feder in seine Sperrposition bewegen.

Das Steuerelement 5 und das Sicherungselement 4 können aber auch derart kinematisch miteinander gekoppelt sein, daß das Steuerelement 5 beim Einführen des Bolzens 2 in das Fangmaul 3 die Bewegung des Sicherungselementes 4 nicht nur freigibt, sondern auch selbst das Sicherungselement 4 in seine Sperrposition bewegt, wie dies durch den in Fig. 1 und 2 dargestellten, nicht näher bezeichneten Federring bewirkt wird, der den Mitnehmer 4a des Sicherungselementes 4 und einen korrespondiernden Mitnehmer am Steuerelement 5 umfaßt.

In den dargestellten Ausführungen liegen die Drehfalle 1 und das Sicherungselement 4 in jeweils einem stirnseitigen Bereich aneinander an und weisen beide jeweils eine Abrollkontur 1b, 4c füreinander auf. Vorteilhafterweise sollte dabei mindestens eines der beiden Teile eine Abrollkontur für das andere Teil aufweisen.

Dabei ist es für einen möglichst leichtgängigen Beginn des Bewegungsablaufes von Vorteil, wenn die Abrollkonturen 1b, 4c in einem (nicht näher bezeichneten) Bereich, in dem die Drehfalle 1 und das Sicherungselement 4 zu Beginn der Bewegung des Sicherungselementes 4 aus seiner nicht sperrenden Position in die Sperrposition aneinander anliegen, ein steigungsfreies Anfangsstück aufweisen.

Ebenso kann es für eine stabile Einnahme der Sperrposition von Vorteil sein, wenn die jeweilige Abrollkontur 1b, 4c in einem Bereich, in dem die Drehfalle 1 und das Sicherungselement 4 zu Ende der Bewegung des Sicherungselementes 4 aus seiner nicht sperrenden Position in die Sperrposition aneinander anliegen, einen (ebenfalls nicht näher bezeichneten) Selbsthemmungsbereich für die Abrollbewegung, d.h. eine jeweils relativ zum anderen Element hin ansteigende Kurvenführung, aufweist.

Außerdem können zu demselben Zweck - wie in Fig. 1 dargestellt - auch unabhängig von der jeweiligen Abrollkontur 1b, 4c gegenseitige Anschlagflächen 1c, 4d vorgesehen sein, die bei Einnahme der Verriegelungsposition durch die Drehfalle 1 jeweils eine Weiterbewegung im Richtungssinn "Entriegelungsposition-Verriegelungsposition" bzw. "nicht sperrende Position-Sperrposition" von Drehfalle 1 und Sicherungselement 4 verhindern.

In bevorzugter Ausführung der Erfindung kann auch das Fangmaul 3 der Drehfalle 1 an mindestens einer Flanke, vorzugsweise an beiden Flanken 3a, 3b an der/denen der Bolzen 2 beim Verriegeln anliegt, eine Abrollkontur für eine Umfangsfläche des Bolzens 2 aufweisen. Auf diese Weise kann eine optimale Führung des Bolzens 2 innerhalb des Fangmauls 3 eingestellt werden.

Wie die Zeichnung veranschaulicht, können in bevorzugter Ausführung der Erfindung die Drehfalle 1, das Sicherungselement 4 und das Steuerelement 5 jeweils schwenkbar in zwei einander gegenüberliegenden Seitenwänden 6a, 6b eines Gehäuses 6 gelagert sein. Die Vorteilhaftigkeit einer solchen Ausführung besteht darin, daß damit alle diese Bauteile 1, 4, 5, 6 zu einer kompakten, leicht handhabbaren und montierbaren Baueinheit zusammengefaßt sind.

Die Seitenwände 6a, 6b des Gehäuses 6 können mit Vorteil jeweils einen zumindest in seiner Größe, aber auch in der Form, dem Querschnitt des Bolzens 2 angepaßten Ausschnitt 6c aufweisen, der entsprechend einem Toleranzfeld die Lage des Bolzens 2 im Gehäuse 6 umfangsgemäß nach drei Seiten begrenzt. Auf diese Weise kann der Bolzen 2 sicher und stabil arretiert werden, da in ihrer Verriegelungsposition (Fig. 1) dann eine Flanke 3b des Fangmauls 3 den umfangsgemäßen Abschluß nach der vierten Seite hin bildet. In Fig. 1 bis 3 geht dieser Ausschnitt 6c jeweils von den nicht näher bezeichneten Unterkanten der Seitenwände 6a, 6b des Gehäuses 6 aus. Er besitzt an der jeweiligen Unterkante etwa eine Breite vom doppelten Bolzendurchmesser und verjüngt sich dann etwa auf das Maß des Durchmessers des Bolzens 2 zuzüglich der Abmaße, die sich aus den zulässigen Toleranzen und dem Spiel ergeben. Der Bolzen 2 gelangt so bei der Herstellung der Verriegelung einfach in den Ausschnitt 6c und wird dort zentriert.

Die Gleitkontur des Fangmauls 3 an mindestens einer Flanke, vorzugsweise an beiden Flanken 3a, 3b, kann nun vorteilhafterweise derart auf die Abrollkontur(en) 1b, 4c für die gegenseitige Abrollbewegung von Drehfalle 1 und Sicherungselement 4 abgestimmt sein, daß bei im Fangmaul 3 vorhandenen Bolzen 2 durch die Bewegung von Drehfalle 1 und Sicherungselement 4 im Zusammenwirken mit dem Ausschnitt 6c des Gehäuses 6 ein selbstnachstellender Toleranz- und Spielausgleich der Lage des Bolzens 2 erfolgt. Der selbstnachstellende Spielausgleich erfolgt dabei in zwei Raumrichtungen, die in den Fig. 1 bis 3 mit den Koordinaten X und Z bezeichnet sind. Wenn unmittelbar nach dem Einführen des Bolzens 2 noch Spiel in X-Richtung vorhanden sein sollte, so wird durch eine geringe Relativbewegung das Spiel solange verringert, bis in der Verriegelungsposition der Drehfalle 1 kein Spiel mehr vorhanden ist. In der dritten Raumrichtung (Y-Richtung), die der Ausrichtung der Längsachse des Bolzens 2 entspricht, kann der Bolzen 2, gegebenenfalls über Gummielemente gedämpft, kraftschlüssig gehalten werden.

Ein weiteres wichtiges, bisher nur einführend erwähntes Merkmal der Erfindung ist, daß die Überführung der Drehfalle 1 aus ihrer Verriegelungs- in ihre Entriegelungsposition einerseits durch ein Bewegen des Sicherungselementes 4, beispielsweise mit Hilfe einer geeigneten Betätigungseinrichtung, wie eines Hebels oder eines Bowdenzugs, aus seiner Sperrposition in seine ungesperrte Position oder aber auch andererseits durch ein Entfernen des Bolzens 2 senkrecht zu einer Ebene in der sich das Fangmaul 3 erstreckt (axiale Richtung des Bolzens 2, Y-Richtung), auslösbar ist. In jedem Fall nimmt die erfindungsgemäße Verriegelungsvorrichtung die oben näher erläuterte monostabile Lage ein.

Das Steuerelement 4 kann bei Entnahme des Bolzens 2 aus dem Fangmaul 3 eine Bewegung des Sicherungselementes 4 in seine nicht sperrende Position sowie eine Bewegung der Drehfalle 1 in ihre Entriegelungsposition entweder nur auslösen oder auch derart kinematisch mit diesen Bauteilen gekoppelt sein, daß es selbst bei Entnahme des Bolzens 2 aus dem Fangmaul 3 das Sicherungselement 4 in seine nicht sperrende Position sowie die Drehfalle 1 mittelbar oder unmittelbar in ihre Entriegelungsposition bewegt.

Ein erfindungsgemäßes Verankerungssystem zeichnet sich durch die Integration einer erfindungsgemäßen Verriegelungsvorrichtung aus, wobei die Drehfalle 1, das Sicherungselement 4 und das Steuerelement 5 mit einem ersten Teil schwenkbar, insbesondere über das Gehäuse 6, verbunden sind und der Bolzen 2 mit einem zweiten Teil fest verbunden ist. Das erste Teil ist dabei relativbeweglich zu dem zweiten Teil.

Das erste Teil, das relativbeweglich zu dem zweiten Teil ist, kann dabei, wie bereits erwähnt, durch den Fuß eines Sitzes, vornehmlich eines entnehmbaren und wickelbaren Fahrzeugsitzes, und das zweite Teil durch den Boden des Fahrzeugs, insbesondere eines Automobils, gebildet sein. Als Verankerung wird dann das ganze System eines Befestigungspunktes (Fuß) des Fahrzeugsitzes an einer Fahrzeugstruktur einschließlich aller der Fahrzeugstruktur zugehörigen Teile bezeichnet, während unter Boden der untere Teil der Fahrzeugstruktur, der die Seitenwände des Fahrzeugs verbindet, verstanden wird. Sitz ist eine Struktur einschließlich Polsterung und Bezug, die einen Sitzplatz für einen Erwachsenen bietet. Der Begriff wird dabei so aufgefaßt, daß er sowohl einen Einzelsitz als auch den Teil einer Sitzbank umfaßt, der einem Sitzplatz für eine Person entspricht. Die erfindungsgemäße Verriegelungsvorrichtung ist in diesem Fall ein Element der Verankerung und hält den Sitz in der Benutzungsstellung. Sie stellt die eigentliche Verbindung zum Fahrzeugaufbau her und teilt sich hier in ein Sitzverriegelungselement, das durch die Drehfalle 1 gebildet wird, und in ein Bodenverriegelungselement, das durch den Bolzen 2 gebildet wird. Das Sicherungselement 4 stellt als Einrichtung gegen unbeabsichtigtes Lösen oder Öffnen der Verankerung durch den Benutzer ebenfalls ein Element des Verankerungssystems dar. Das Steuerelement 5 dient als Element des erfindungsgemäßen Verankerungssystems zum selbsttätigen Öffnen/Schließen der Sicherung und/oder der Verriegelungsvorrichtung beim Verriegelungs- und Entriegelungsvorgang. Das Verankerungssystem kann auch umgekehrt eingesetzt werden, d.h. die Drehfalle 1 kann fahrzeugseitig als Bodenverriegelungselement und der Bolzen 2 als Sitzverriegelungselement konzipiert werden. Die Raumkoordinate X entspricht vorzugsweise in dem erfindungsgemäßen Verankerungssystem der Fahrtrichtung des Fahrzeugs bzw. der Erstreckungsrichtung der Fahrzeuglängsachse, die Raumkoordinate Y der Erstreckungsrichtung der Fahrzeugquerachse und die Raumkoordinate Z der Vertikalen. Das erfindungsgemäße Verankerungssystem mit verbesserter Sicherheit stellt so z.B. eine kostengünstige Alternative zu bekannten Sitzverankerungssystemen dar, bei der weder eine Scheinverriegelung noch eine Fehlverriegelung auftreten kann.

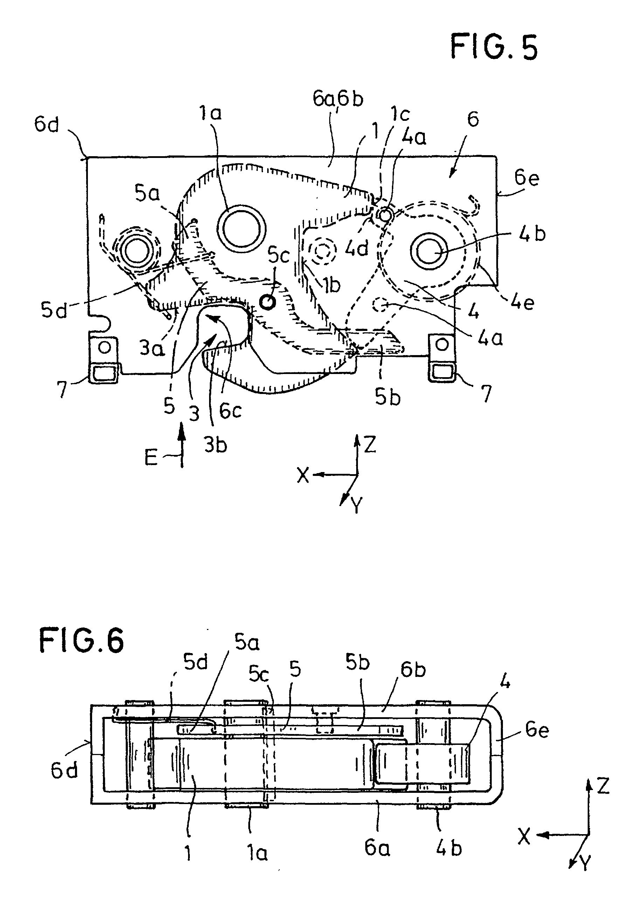

Die in Fig. 4 bis 6 in verschiedenen Ansichten in Verriegelungsposition dargestellte eine zweite Ausführung einer erfindungsgemäßen Verriegelungsvorrichtung unterscheidet sich nur wenig von der ersten Ausführung der Erfindung. Der Aufbau stimmt in den wesentlichen Teilen überein und wird daher nicht nochmals erläutert. Insofern sind die perspektivische Darstellung in Fig. 4 und die Draufsicht in Fig. 6, aus der beispielsweise zu entnehmen ist, daß das Steuerelement 5 im Gehäuse 6 neben dem Sicherungselement 4 (in der Draufsicht unterhalb des Sicherungselementes 4) angeordnet sind im wesentlichen auch repräsentativ für die erste Ausführung der erfindungsgemäßen Verriegelungsvorrichtung.

Die Unterschiede der beiden Ausführungen gehen jedoch insbesondere aus einem Vergleich von Fig. 5 mit Fig. 1 hervor, aus dem deutlich wird, daß in der zweiten Ausführung eine ganz bestimmte Federanordnung realisiert ist. Es stehen das Sicherungselement 4 und das Steuerelement 5 jeweils unter der Belastung einer Feder 4e, 5d, wobei es sich insbesondere um Schenkelfedern handelt.

Ein Schenkel der Feder 5d für das Steuerelement 5 stützt sich an einer Stirnwand 6d des Gehäuses 6 ab, der andere Schenkel belastet den ersten Hebelarm 5a des Steuerelementes 5 gemäß Fig. 5 mit einer Kraft in Richtung des Uhrzeigersinnes.

Ein Schenkel der Feder 4e für das Sicherungselement 4 stützt sich an der Stirnwand 6e des Gehäuses 6 ab, die der Stirnwand 6d gegenüberliegt, an der sich die Feder 5d für das Steuerelement 5 abstützt. Der andere Schenkel dieser Feder 4e belastet das Sicherungselement 4 gemäß Fig. 5 mit einer Kraft in Richtung gegen den Uhrzeigersinn.

Hinsichtlich ihrer Wirkung auf das Sicherungselement verhalten sich die Feder 5d für das Steuerelement 5 und die Feder 4e für das Sicherungselement 4 somit antagonistisch zueinander. Die Feder 5d für das Steuerelement 5 hat (vermittelt über die beiden Hebelarme 5a, 5b des Steuerelementes 5) das Bestreben, das Sicherungselement 4 in seine nicht sperrende Position zu bewegen, während die Feder 4e für das Sicherungselement 4 das Bestreben hat, das Sicherungselement 4 in seine Sperrposition zu verschwenken. Damit bei Nichtvorhandensein eines Bolzens 2 im Fangmaul 3 die Drehfalle 1 monostabil die Entriegelungsstellung einnimmt, ist die Feder 5d für das Steuerelement 5 hinsichtlich ihrer resultierenden Wirkung auf das Sicherungselement 4 (unter Berücksichtigung der Hebelarme 5a, 5b) stärker ausgelegt als die Feder 4e für das Sicherungselement 4. Bei einem Entfernen des Bolzens 2 in seiner Längsrichtung liegt der zweite Hebelarm 5b des Steuerelementes 5 am Mitnehmer 4a des Sicherungselementes 4 an und bewegt das Sicherungselement 4 unter Wirkung der Feder 5d des Steuerelementes 5 gegen die Wirkung der Feder 4e des Sicherungselementes 4 in seine ungesperrte Position, wodurch die Drehfalle 1 in ihre Entriegelungsposition gelangt bzw. gelangen kann. Die Schwenkbewegung der Drehfalle 1 kann dabei ebenfalls federunterstützt ablaufen.

Wie bereits aus der vorstehenden Beschreibung hervorgeht, ist die vorliegende Erfindung nicht auf die dargestellten Ausführungsbeispiele beschränkt, sondern umfaßt auch alle im Sinne der Erfindung gleichwirkenden Ausführungen. Beispielsweise braucht entsprechend der oben beschriebenen ersten Ausführung der Erfindung nur das Steuerelement 5, es können aber auch die Drehfalle 1, das Sicherungselement 4 und/oder das Steuerelement 5 jeweils unter der Belastung einer Feder stehen, wobei unterschiedliche Federkombinationen hinsichtlich Federkraft und Wirkungsrichtung möglich sind. Die Lagerachsen 1a, 4b, 5c von Drehfalle 1, das Sicherungselement 4 und Steuerelement 5 können - wie dargestellt - auf unterschiedliche Weise, beispielsweise als Bolzen- oder auch als Buchsenlagerung ausgeführt sein.

Die Vorrichtung kann weitere zweckmäßige Details, wie die in der Zeichnung mit dem Bezugszeichen 7 gekennzeichneten Gleitfüße, aufweisen. Auf diesen Gleitfüßen 7 kann bei fest montiertem Bolzen 2 auch das gesamte Gehäuse mit den darin montierten Bauteilen seitlich (in Y-Richtung) verschoben werden, um die Verriegelung des Bolzens 2 aufzuheben.

Der Bolzen 2 braucht nicht - wie dargestellt - einen kreisrunden, sondern könnte auch beispielsweise einen polygonalen Querschnitt aufweisen.

## Patentansprüche

1. Verriegelungsvorrichtung mit einer Drehfalle (1) und mit einem in der Drehfalle (1) verriegelbaren Bolzen (2), wobei die Drehfalle (1) zum Verriegeln, insbesondere mittels des in ein Fangmaul (3) der Drehfalle (1) eingreifenden Bolzens (2), aus einer Entriegelungsposition in eine Verriegelungsposition verschwenkbar ist, sowie mit einem Sicherungselement (4), das bei Einnahme der Verriegelungsposition der Drehfalle (1) aus einer nicht sperrenden Position in eine Sperrposition bewegbar ist, in der es eine Schwenkbewegung der Drehfalle (1) in ihre Entriegelungsposition verhindert, wobei ein Steuerelement (5) vorhanden ist, welches derart ausgebildet und in Bezug auf die Drehfalle (1) sowie auf das Sicherungselement (4) angeordnet ist, daß das Steuerelement (5) das Vorhandensein des Bolzens (2) im Fangmaul (3) erfasst,
**dadurch gekennzeichnet, dass** das Steuerelement (5) das Vorhandensein des Bolzens (2) im Fangmaul (3) derart erfasst, das bei nicht im Fangmaul (3) vorhandenem Bolzen (2) durch das Zusammenwirken von Drehfalle (1), Sicherungselement (4) und Steuerelement (5) das Steuerelement (5) zwangsweise derart die Entriegelungsposition der Drehfalle (1) auslöst, und zwar derart, dass das Steuerelement (5) bei Entnahme des Bolzens (2) aus dem Fangmaul (3) eine Bewegung des Sicherungselements (4) in seine nicht sperrende Position sowie eine Bewegung der Drehfalle (1) in ihre Entriegelungsposition auslöst.

2. Verriegelungsvorrichtung nach Anspruch 1, **dadurch gekennzeichnet, daß** die Überführung der Drehfalle (1) aus ihrer Verriegelungsposition in ihre Entriegelungsposition einerseits durch ein Bewegen des Sicherungselementes (4) aus seiner Sperrposition in seine nicht sperrende Position oder andererseits durch ein Entfernen des Bolzens (2) senkrecht zu einer Ebene in der sich das Fangmaul (3) erstreckt, auslösbar ist.

3. Verriegelungsvorrichtung nach Anspruch 1 oder 2, **dadurch gekennzeichnet, daß** das Steuerelement (5) beim Einführen des Bolzens (2) in das Fangmaul (3) die Bewegung des Sicherungselementes (4) in seine Sperrposition freigibt.

4. Verriegelungsvorrichtung nach einem der Ansprüche 1 bis 3, dadurch gekennnzeichnet, daß das Steuerelement (5) beim Einführen des Bolzens (2) in das Fangmaul (3) das Sicherungselement (4) in seine Sperrposition bewegt.

5. Verriegelungsvorrichtung nach einem der Ansprüche 1 bis 4, **dadurch gekennzeichnet, daß** das Steuerelement (5) bei Entnahme des Bolzens (2) aus dem Fangmaul (3) das Sicherungselement (4) in seine nicht sperrende Position sowie die Drehfalle (1) in ihre Entriegelungsposition bewegt.

6. Verriegelungsvorrichtung nach einem der Ansprüche 1 bis 5,
**dadurch gekennzeichnet, daß** das Steuerelement (5) bei nicht im Fangmaul (3) vorhandenem Bolzen (2) die Bewegung des Sicherungselementes (4) in seine Sperrposition verhindert.

7. Verriegelungsvorrichtung nach einem der Ansprüche 1 bis 6, **dadurch gekennzeichnet, daß** die Drehfalle (1), das Sicherungselement (4) und/oder das Steuerelement (5) jeweils unter der Belastung einer Feder (4e, 5d) stehen.

8. Verriegelungsvorrichtung nach einem der Ansprüche 1 bis 7, **dadurch gekennzeichnet, daß** die Drehfalle (1) mittelbar oder unmittelbar mittels einer Feder (5d) in der Entriegelungsposition gehalten ist.

9. Verriegelungsvorrichtung nach einem der Ansprüche 1 bis 8, **dadurch gekennzeichnet, daß** die Drehfalle (1) mittels des Sicherungselementes (4) in der Entriegelungsposition gehalten ist.

10. Verriegelungsvorrichtung nach einem der Ansprüche 1 bis 9, **dadurch gekennzeichnet, daß** die Drehfalle (1) und das Sicherungselement (4) in jeweils einem stirnseitigen Bereich aneinander anliegen und mindestens eines der beiden Teile (1, 4) eine Abrollkontur (1b, 4c) für das andere Teil (4, 1) aufweist.

11. Verriegelungsvorrichtung nach Anspruch 10, **dadurch gekennzeichnet, daß** die Abrollkontur (1b, 4c), in einem Bereich, in dem die Drehfalle (1) und das Sicherungselement (4) zu Ende der Bewegung des Sicherungselementes (4) aus seiner nicht sperrenden Position in die Sperrposition aneinander anliegen, einen Selbsthemmungsbereich für die Abrollbewegung aufweist.

12. Verriegelungsvorrichtung nach Anspruch 10 oder 11, **dadurch gekennzeichnet, daß** die Abrollkontur (1b, 4c) in einem Bereich, in dem die Drehfalle (1) und das Sicherungselement (4) zu Beginn der Bewegung des Sicherungselementes (4) aus seiner nicht sperrenden Position in die Sperrposition aneinander anliegen, ein steigungsfreies Anfangsstück aufweist.

13. Verriegelungsvorrichtung nach einem der Ansprüche 1 bis 12, **dadurch gekennzeichnet, daß** das Fangmaul (3) der Drehfalle (1) an mindestens einer Flanke, vorzugsweise an beiden Flanken (3a, 3b), an der/denen der Bolzen (2) beim Verriegeln anliegt, eine Gleitkontur für eine Umfangsfläche des Bolzens (2) aufweist.

14. Verriegelungsvorrichtung nach einem der Ansprüche 1 bis 13, **dadurch gekennzeichnet, daß** das Steuerelement (5) als Feder ausgebildet ist.

15. Verriegelungsvorrichtung nach einem der Ansprüche 1 bis 13, **dadurch gekennzeichnet, daß** das Steuerelement (5) als insbesondere zweiarmiger (5a, 5b) Hebel ausgebildet ist.

16. Verriegelungsvorrichtung nach Anspruch 15, **dadurch gekennzeichnet, daß** ein Hebelarm (5a) des Steuerelementes (5) bei Vorliegen der Entriegelungsposition der Drehfalle (1), insbesondere unter der Wirkung einer Feder (5d), das Fangmaul (3) der Drehfalle (1) abdeckt oder darin gehalten ist.

17. Verriegelungsvorrichtung nach Anspruch 16, **dadurch gekennzeichnet, daß** der Hebelarm (5a) des Steuerelementes (5a), der bei Vorliegen der Entriegelungsposition der Drehfalle (1) das Fangmaul (3) der Drehfalle (1) abdeckt oder darin gehalten ist, beim Einführen des Bolzens (2) in das Fangmaul (3) durch den Bolzen (2), insbesondere gegen die Wirkung mindestens einer Feder (5d), aus dem Bereich des Fangmaules (3) gedrückt wird.

18. Verriegelungsvorrichtung nach einem der Ansprüche 1 bis 17, **dadurch gekennzeichnet, daß** die Drehfalle (1), das Sicherungselement (4) und das Steuerelement (5) schwenkbar in zwei einander gegenüberliegenden Seitenwänden (6a, 6b) eines Gehäuses (6) gelagert sind.

19. Verriegelungsvorrichtung nach Anspruch 18, **dadurch gekennzeichnet, daß** die Seitenwände (6a, 6b) des Gehäuses (6) jeweils einen zumindest in seiner Größe dem Querschnitt des Bolzens (2) angepaßten Ausschnitt (6c) aufweisen, der entsprechend einem Toleranzfeld die Kontur des Bolzens (2) im Gehäuse (6) umfangsgemäß nach drei Seiten begrenzt

20. Verriegelungsvorrichtung nach Anspruch 19, **dadurch gekennzeichnet, daß** die Gleitkontur des Fangmauls (3) an mindestens einer Flanke, vorzugsweise an beiden Flanken (3a, 3b), derart auf die Abrollkontur(en) (1b, 4c) für die gegenseitige Abrollbewegung von Drehfalle (1) und Sicherungselement (4) abgestimmt ist, daß bei im Fangmaul (3) vorhandenen Bolzen (2) durch die Bewegung von Drehfalle (1) und Sicherungselement (4) im Zusammenwirken mit dem Ausschnitt (6c) des Gehäuses (6) ein selbstnachstellender Toleranzund Spielausgleich der Lage des Bolzens (2) erfolgt.

21. Verankerungssystem zur gegenseitigen Verankerung eines ersten Teils und eines zweiten Teils, wobei das erste Teil relativbeweglich zu dem zweiten Teil ist, **gekennzeichnet durch** eine Verriegelungsvorrichtung nach einem oder mehreren der Ansprüche 1 bis 20, wobei die Drehfalle (1), das Sicherungselement (4) und das Steuerelement (5) mit dem ersten Teil schwenkbar, insbesondere über ein Gehäuse (6), verbunden sind und der Bolzen (2) mit dem zweiten Teil fest verbunden ist.

22. Verankerungssystem nach Anspruch 21 für entnehmbare und wickelbare Fahrzeugsitze, **dadurch gekennzeichnet, daß** das erste Teil durch den Fuß eines Sitzes und das zweite Teil durch den Boden eines Automobils gebildet ist.

23. Verankerungssystem nach Anspruch 22 für entnehmbare und wickelbare Fahrzeugsitze, **dadurch gekennzeichnet, daß** das zweite Teil durch den Fuß eines Sitzes und das erste Teil durch den Boden eines Automobils gebildet ist.

## Claims

1. Locking device having a rotary latch (1) and having a bolt (2) which can be locked in the rotary latch (1), the rotary latch (1) for locking, in particular by means of the bolt (2) which engages in an intercepting mouth (3) of the rotary latch (1), being pivotable from an unlocking position into a locking position, and having a securing element (4) which, when the rotary latch (1) takes up the locking position, can be moved from a nonblocking position into a blocking position, in which it prevents the rotary latch (1) from pivoting into its unlocking position, there being a control element (5) which is designed in such a manner and is arranged with respect to the rotary latch (1) and the securing element (4) that the control element (5) detects the presence of the bolt (2) in the intercepting mouth (3), **characterized in that** the control element (5) detects the presence of the bolt (2) in the intercepting mouth (3) in such a manner that when the bolt (2) is not in the intercepting mouth (3) the interaction of the rotary latch (1), securing element (4) and control element (5) causes the control element (5) to inevitably release the unlocking position of the rotary latch (1) in such a manner, and specifically in such a manner that, when the bolt (2) is removed from the intercepting mouth (3), the control element (5) triggers a movement of the securing element (4) into its nonblocking position and a movement of the rotary latch (1) into its unlocking position.

2. Locking device according to Claim 1, **characterized in that** the transfer of the rotary latch (1) from its locking position into its unlocking position can be triggered, on the one hand, by a movement of the securing element (4) from its blocking position into its unblocking position or, on the other hand, by removal of the bolt (2) perpendicular to a plane in which the intercepting mouth (3) extends.

3. Locking device according to Claim 1 or 2, **characterized in that** during the insertion of the bolt (2) into the intercepting mouth (3), the control element (5) releases the movement of the securing element (4) into its blocking position.

4. Locking device according to one of Claims 1 to 3, **characterized in that** during the insertion of the bolt (2) into the intercepting mouth (3), the control element (5) moves the securing element (4) into its blocking position.

5. Locking device according to one of Claims 1 to 4, **characterized in that** during removal of the bolt (2) from the intercepting mouth (3), the control element (5) moves the securing element (4) into its nonblocking position and the rotary latch (1) into its unlocking position.

6. Locking device according to one of Claims 1 to 5, **characterized in that** when the bolt (2) is not present in the intercepting mouth (3), the control element (5) prevents the movement of the securing element (4) into its blocking position.

7. Locking device according to one of Claims 1 to 6, **characterized in that** the rotary latch (1), the securing element (4) and/or the control element (5) are in each case loaded by a spring (4e, 5d).

8. Locking device according to one of Claims 1 to 7, **characterized in that** the rotary latch (1) is held in the unlocking position directly or indirectly by means of a spring (5d).

9. Locking device according to one of Claims 1 to 8, **characterized in that** the rotary latch (1) is held in the unlocking position by means of the securing element (4).

10. Locking device according to one of Claims 1 to 9, **characterized in that** the rotary latch (1) and the securing element (4) bear against each other in a respective region on the end side and at least one of the two parts (1, 4) has a rolling contour (1b, 4c) for the other part (4, 1).

11. Locking device according to Claim 10, **characterized in that** the rolling contour (1b, 4c) has, in a region in which the rotary latch (1) and the securing element (4) bear against each other at the end of the movement of the securing element (4) from its nonblocking position into the blocking position, a self-locking region for the rolling movement.

12. Locking device according to Claim 10 or 11,
**characterized in that** the rolling contour (1b, 4c) has, in a region in which the rotary latch (1) and the securing element (4) bear against each other at the beginning of the movement of the securing element (4) from its nonblocking position into the blocking position, an incline-free initial section.

13. Locking device according to one of Claims 1 to 12, **characterized in that** the intercepting mouth (3) of the rotary latch (1) has, on at least one flank, preferably on both flanks (3a, 3b) against which the bolt (2) bears during locking, a sliding contour for a circumferential surface of the bolt (2).

14. Locking device according to one of Claims 1 to 13, **characterized in that** the control element (5) is designed as a spring.

15. Locking device according to one of Claims 1 to 13, **characterized in that** the control element (5) is designed as an in particular two-armed lever (5a, 5b).

16. Locking device according to Claim 15, **characterized in that** when the rotary latch (1) is in the unlocking position, one lever arm (5a) of the control element (5) covers the intercepting mouth (3) of the rotary latch (1) or is held therein, in particular under the action of a spring (5d).

17. Locking device according to Claim 16, **characterized in that** the lever arm (5a) of the control element (5), which, when the rotary latch (1) is in the unlocking position, covers the intercepting mouth (3) of the rotary latch (1) or is held therein, is, during insertion of the bolt (2) into the intercepting mouth (3), pressed by the bolt (2) out of the region of the intercepting mouth (3), in particular counter to the action of at least one spring (5d).

18. Locking device according to one of Claims 1 to 17, **characterized in that** the rotary latch (1), the securing element (4) and the control element (5) are mounted pivotably in two mutually opposite side walls (6a, 6b) of a housing (6).

19. Locking device according to Claim 18, **characterized in that** the side walls (6a, 6b) of the housing (6) each have a cutout (6c) which is matched at least in its size to the cross section of the bolt (2) and bounds the contour of the bolt (2) in the housing (6) circumferentially on three sides in accordance with a tolerance zone.

20. Locking device according to Claim 19, **characterized in that** the sliding contour of the intercepting mouth (3) is matched on at least one flank, preferably on both flanks (3a, 3b), to the rolling contour(s) (1b, 4c) for the mutual rolling movement of the rotary latch (1) and securing element (4) in such a manner that when the bolt (2) is present in the intercepting mouth (3), the movement of the rotary latch (1) and securing element (4) in interaction with the cutout (6c) of the housing (6) brings about a self-adjusting compensation of tolerance and play in the position of the bolt (2).

21. Anchoring system for the mutual anchoring of a first part and a second part, the first part being moveable relative to the second part, **characterized by** a locking device according to one or more of Claims 1 to 20, the rotary latch (1), the securing element (4) and the control element (5) being connected pivotably to the first part, in particular via a housing (6), and the bolt (2) being connected fixedly to the second part.

22. Anchoring system according to Claim 21 for vehicle seats which can be removed and wrapped up, **characterized in that** the first part is formed by the foot of a seat and the second part by the floor of a car.

23. Anchoring system according to Claim 22 for vehicle seats which can be removed and wrapped up, **characterized in that** the second part is formed by the foot of a seat and the first part by the floor of a car.

## Revendications

1. Dispositif de verrouillage muni d'un loquet tournant (1) et muni d'un axe (2) verrouillable dans le loquet tournant, le loquet tournant (1) pouvant être basculé d'une position de déverrouillage dans une position de verrouillage afin de verrouiller, notamment au moyen de l'axe (2) qui s'engage dans une fourche d'accrochage (3) du loquet tournant (1), et muni d'un élément de blocage (4) qui, lorsque le loquet tournant (1) prend sa position de verrouillage, peut se déplacer d'une position de non-blocage en une position de blocage dans laquelle il empêche un mouvement de basculement du loquet tournant (1) dans sa position de déverrouillage, un élément de commande (5) étant présent, lequel est configuré et disposé par rapport au loquet tournant (1) et à l'élément de blocage (4) de telle manière que l'élément de commande (5) détecte la présence de l'axe (2) dans la fourche d'accrochage (3), **caractérisé en ce que** l'élément de commande (5) détecte la présence de l'axe (2) dans la fourche d'accrochage (3) de telle manière que lorsque l'axe (2) n'est pas présent dans la fourche d'accrochage (3), l'interaction du loquet tournant (1), de l'élément de blocage (4) et de l'élément de commande (5) a pour effet que l'élément de commande (5) amène de force le loquet tournant (1) dans sa position de déverrouillage, et ce de telle manière que l'élément de commande (5), lorsque l'axe (2) est retiré de la fourche d'accrochage (3), déclenche un mouvement de l'élément de blocage (4) dans sa position de non-blocage et un mouvement du loquet tournant (1) dans sa position de déverrouillage.

2. Dispositif de verrouillage selon la revendication 1, **caractérisé en ce que** le transfert du loquet tournant (1) de sa position de verrouillage dans sa position de déverrouillage peut être déclenché d'une part par un mouvement de l'élément de blocage (4) de sa position de blocage dans sa position de non-blocage ou, d'autre part, par un retrait de l'axe (2) perpendiculairement à un plan dans lequel s'étend la fourche d'accrochage (3).

3. Dispositif de verrouillage selon la revendication 1 ou 2, **caractérisé en ce que** l'élément de commande (5), lors de l'insertion de l'axe (2) dans la fourche d'accrochage (3), libère le mouvement de l'élément de blocage (4) dans sa position de blocage.

4. Dispositif de verrouillage selon l'une des revendications 1 à 3, **caractérisé en ce que** l'élément de commande (5), lors de l'insertion de l'axe (2) dans la fourche d'accrochage (3), déplace l'élément de blocage (4) dans sa position de blocage.

5. Dispositif de verrouillage selon l'une des revendications 1 à 4, **caractérisé en ce que** l'élément de commande (5), lors du retrait de l'axe (2) de la fourche d'accrochage (3), amène l'élément de blocage (4) dans sa position de non-blocage et le loquet tournant (1) dans sa position de déverrouillage.

6. Dispositif de verrouillage selon l'une des revendications 1 à 5, **caractérisé en ce que** l'élément de commande (5), lorsque l'axe (2) n'est pas présent dans la fourche d'accrochage (3), empêche le déplacement de l'élément de blocage (4) dans sa position de blocage.

7. Dispositif de verrouillage selon l'une des revendications 1 à 6, **caractérisé en ce que** le loquet tournant (1), l'élément de blocage (4) et/ou l'élément de commande (5) sont respectivement sous la charge d'un ressort (4e, 5d).

8. Dispositif de verrouillage selon l'une des revendications 1 à 7, **caractérisé en ce que** le loquet tournant (1) est maintenu en position de déverrouillage directement ou indirectement à l'aide d'un ressort (5d).

9. Dispositif de verrouillage selon l'une des revendications 1 à 8, **caractérisé en ce que** le loquet tournant (1) est maintenu dans la position de déverrouillage à l'aide de l'élément de blocage (4).

10. Dispositif de verrouillage selon l'une des revendications 1 à 9, **caractérisé en ce que** le loquet tournant (1) et l'élément de blocage (4) reposent respectivement l'un contre l'autre par leur partie avant et au moins l'une des deux pièces (1, 4) présente un profil de roulement (1b, 4c) pour l'autre pièce (4, 1).

11. Dispositif de verrouillage selon la revendication 10, **caractérisé en ce que** le profil de roulement (1b, 4c) présente une zone d'arrêt automatique du mouvement de roulement dans une zone dans laquelle le loquet tournant (1) et l'élément de blocage (4) reposent l'un contre l'autre à la fin du déplacement de l'élément de blocage (4) de sa position de non-blocage vers sa position de blocage.

12. Dispositif de verrouillage selon la revendication 10 ou 11, **caractérisé en ce que** le profil de roulement (1b, 4c) présente un élément de départ sans inclinaison dans une zone dans laquelle le loquet tournant (1) et l'élément de blocage (4) reposent l'un contre l'autre au début du déplacement de l'élément de blocage (4) de sa position de non-blocage vers sa position de blocage.

13. Dispositif de verrouillage selon l'une des revendications 1 à 12, **caractérisé en ce que** la fourche d'accrochage (3) du loquet tournant (1) présente un profilé lisse pour une surface périphérique de l'axe (2) sur au moins un flanc, de préférence sur les deux flancs (3a, 3b) sur lequel/lesquels repose l'axe (2) lors du verrouillage.

14. Dispositif de verrouillage selon l'une des revendications 1 à 13, **caractérisé en ce que** l'élément de commande (5) est réalisé sous la forme d'un ressort.

15. Dispositif de verrouillage selon l'une des revendications 1 à 13, **caractérisé en ce que** l'élément de commande (5) est réalisé sous la forme d'un levier notamment à deux bras (5a, 5b).

16. Dispositif de verrouillage selon la revendication 15, **caractérisé en ce qu'**un bras de levier (5a) de l'élément de commande (5) recouvre la fourche d'accrochage (3) du loquet tournant (1) ou y est maintenu lorsque le loquet tournant (1) se trouve en position de déverrouillage, notamment sous l'effet d'un ressort (5d).

17. Dispositif de verrouillage selon la revendication 16, **caractérisé en ce que** le bras de levier (5a) de l'élément de commande (5) qui recouvre la fourche d'accrochage (3) du loquet tournant (1) ou y est maintenu lorsque le loquet tournant (1) se trouve en position de déverrouillage est poussé hors de la zone de la fourche d'accrochage (3) par l'axe (2) lors de l'introduction de l'axe (2) dans la fourche d'accrochage (3), notamment contre l'effet d'au moins un ressort (5d).

18. Dispositif de verrouillage selon l'une des revendications 1 à 17, **caractérisé en ce que** le loquet tournant (1), l'élément de blocage (4) et l'élément de commande (5) sont logés de manière à pouvoir pivoter dans deux parois latérales (6a, 6b) opposées d'un boîtier (6).

19. Dispositif de verrouillage selon la revendication 18, **caractérisé en ce que** les parois latérales (6a, 6b) du boîtier (6) présentent respectivement une découpe (6c) dont au moins la taille est adaptée à la section transversale de l'axe (2), laquelle limite sur trois côtés le pourtour du profil de l'axe (2) dans le boîtier (6) en fonction d'une plage de tolérance.

20. Dispositif de verrouillage selon la revendication 19, **caractérisé en ce que** le profilé lisse de la fourche d'accrochage (3) est adapté au moins au niveau d'un flanc, de préférence au niveau des deux flancs (3a, 3b), aux profil(s) de roulement (4b, 4c) destiné(s) au mouvement de roulement mutuel du loquet tournant (1) et de l'élément de commande (4) de telle manière que lorsque l'axe (2) est présent dans la fourche d'accrochage (3), il se produit une compensation à réajustage automatique de la tolérance et du jeu de la position de l'axe (2) de par le mouvement du loquet tournant (1) et de l'élément de blocage (4) agissant conjointement avec la découpe (6c) du boîtier (6).

21. Système d'ancrage pour l'ancrage mutuel d'une première pièce et d'une deuxième pièce, la première pièce étant mobile relativement à la deuxième pièce, **caractérisé par** un dispositif de verrouillage selon une ou plusieurs des revendications 1 à 20, le loquet tournant (1), l'élément de blocage (4) et l'élément de commande (5) étant reliés avec la première pièce de manière à pouvoir pivoter, notamment par le biais d'un boîtier (6), et l'axe (2) étant fixé à demeure avec la deuxième pièce.

22. Système d'ancrage selon la revendication 21 pour sièges amovibles et déroulants pour véhicule, **caractérisé en ce que** la première pièce est formée par le pied d'un siège et la deuxième pièce par le sol d'une automobile.

23. Système d'ancrage selon la revendication 22 pour sièges amovibles et déroulants pour véhicule, **caractérisé en ce que** la deuxième pièce est formée par le pied d'un siège et la première pièce par le sol d'une automobile.
